# EUROPEAN PATENT APPLICATION

(11) **EP 1 633 162 A1**
(43) Date of publication of application: **08.03.2006**
(21) Application number: 05014729.7
(22) Date of filing: 07.07.2005
(51) Int. Cl.: H04Q 7/38

(54) **Mobile station apparatus paging control method and mobile communication system**

(30) Priority: 06.09.2004 JP 2004257975
(71) Applicant: Evolium S.A.S., 75008 Paris (FR)
(72) Inventor: Katsube, Yoshihisa, Kawasaki Kanagawa (JP); Takagi, Junichi, Yokohama Kanagawa (JP)
(74) Representative: Kugler, Hermann

(57) **Abstract**

[Object]

To propose a paging control method capable of optimizing the number of times of a paging signal retransmission, increasing a call acceptance probability, and reducing a system load.

[Constitution]

A paging control method, which can change for each mobile station apparatus the number of times of paging signal retransmission in a W-CDMA mobile communication system, the method including monitoring and recording whether a mobile station apparatus responds to a paging signal or the mobile station apparatus calls ; and changing the number of times of a paging signal retransmission according to the response of the recorded mobile station apparatus or call from the recorded mobile station apparatus based on the predetermined standard.

## Description

### [Technical Field]

The present invention relates to a paging control method and a mobile communication system capable of changing the number of times of a paging signal retransmission for each mobile station apparatus. More specifically, the present invention relates to a paging control method and the mobile communication system capable of changing the number of times of the paging signal retransmission on a paging channel (PCH), that is one of common channels used in a wideband-code division multiple access (W-CDMA) mobile communication system, for each mobile station apparatus, based on a response of the mobile station apparatus to the paging signal or a call from the mobile station apparatus.

### [Background Art]

In a conventional W-CDMA mobile communication system, if the mobile station apparatus fails to respond to the paging signal, the paging signal is retransmitted to the mobile station apparatus by a fixed number of times uniquely preset by a network, in relation to a paging processing (calling processing) for paging the mobile station apparatus. A call acceptance processing is performed when the mobile station apparatus transmits a response to the paging signal to the network in this paging processing.

In such a paging processing, the number of times of the paging signal retransmission is set at a number uniform to each mobile station apparatus. Due to this, depending on a radio wave environment in which each mobile station apparatus is put or a paging condition, the number of times of the paging signal retransmission is often insufficient or excessive. If the number of times of the paging signal retransmission is insufficient, a call acceptance probability is reduced. If the number of times of the paging signal retransmission is excessive, a sum of down transmission powers of base station apparatuses increases, which may possibly result in an increase in a down interference power or an increase in a system load.

### [DISCLOSURE OF THE INVENTION]

### [Problems that the Invention is to Solve]

It is an object of the present invention to provide a paging control method and a mobile communication system capable of optimizing the number of times of the paging signal retransmission on a paging channel (PCH), that is one of common channels used in the W-CDMA mobile communication system, increasing a call acceptance probability, and reducing a system load.

### [Means to Solving the Problems]

According to the invention set forth in claim 1, there is provided a paging control method, which can change the number of times of paging signal retransmission for each mobile station apparatus in a W-CDMA mobile communication system, the method comprising steps of:
monitoring whether a mobile station apparatus responds to a paging signal or the mobile station apparatus calls ; and
changing the number of times of the paging signal retransmission according to the response to the paging signal of the monitored mobile station apparatus or call from the monitored mobile station apparatus based on a predetermined standard.

By thus constituting the paging control method, the number of times of the paging signal retransmission can be optimized according to the response of the mobile station apparatus to the paging signal or the call from the mobile station apparatus, the call acceptance probability can be increased, and the system load can be reduced.

According to the invention set forth in claim 2,
if the mobile station apparatus fails to respond to the paging signal and the retransmitted paging signal by as much as an initial set number of times, the number of times of the paging signal retransmission is increased from the initial set number during a first time period;
if the mobile station apparatus responds to the paging signal or the retransmitted paging signal or the mobile station apparatus calls within the first time period, the number of times of the paging signal retransmission is returned to the initial set number, or if the first time period expires without a paging to the mobile station apparatus or without a call from the mobile station apparatus, the number of times of the paging signal retransmission is returned to the initial set number;
if the number of times of a paging failure, by as much as which the mobile station apparatus fails to respond to the paging signal or the retransmitted paging signal within the first time period, reaches a predetermined number of times, then the first time period is invalidated and the number of times of the paging signal retransmission is decreased from the initial set number during a second time period; and
if the mobile station apparatus responds to the paging signal or the retransmitted paging signal or the mobile station apparatus calls within the second time period, the number of times of the paging signal retransmission is returned to the initial set number, or if the second time period expires without the paging to the mobile station or without the call from the mobile station apparatus, the number of times of the paging signal retransmission is returned to the initial set number.

By thus constituting the paging control method, if the mobile station apparatus fails to respond to the paging signal, the number of times of the paging signal retransmission is increased during the first time period so as to increase a response probability for a next paging. If an effect of improving the call probability cannot be expected even by increasing the number of times of the paging signal retransmission, then the number of times of the paging signal retransmission is decreased during the second time period so as to reduce an unnecessary down system load. The number of times of the paging signal retransmission can be thereby optimized.

According to the invention set forth in claim 3, there is provided a W-CDMA mobile communication system capable of changing the number of times of a paging signal retransmission for each mobile station apparatus, the system comprising:
the mobile station apparatus communicable with a switching center apparatus through a base station apparatus;
the switching center apparatus transmitting the paging signal to the mobile station apparatus through the base station apparatus in response to a request, and retransmitting the paging signal to the mobile station apparatus, if the mobile station apparatus fails to respond to the paging signal, or receiving a call from the mobile station apparatus through the base station apparatus; and
a management apparatus for managing the number of times of the paging signal retransmission for each mobile station apparatus, wherein
the management apparatus includes recording means for recording a response of the mobile station apparatus to the paging signal or recording the call from the mobile station apparatus, thereby changing the number of times of the paging signal retransmission according to a result recorded in the recording means for each mobile station apparatus based on a predetermined standard.

By thus constituting the W-CDMA mobile communication system, the management apparatus can optimize the number of times of the paging signal retransmission, according to the response of the mobile station apparatus to the paging signal or the call from the mobile station apparatus, increase the call acceptance probability, and reduce the system load.

According to the invention set forth in claim 4,
the management apparatus manages the number of times of the paging signal retransmission to the mobile station apparatus such that;
if the mobile station apparatus fails to respond to the paging signal and the retransmitted paging signal by as much as an initial set number of times, the number of times of the paging signal retransmission is increased from the initial set number during a first time period;
if the mobile station apparatus responds to the paging signal or the retransmitted paging signal or the mobile station apparatus calls within the first time period, the number of times of the paging signal retransmission is returned to the initial set number, or if the first time period expires without a paging to the mobile station apparatus or without a call from the mobile station apparatus, the number of times of the paging signal retransmission is returned to the initial set number;
if the number of times of a paging failure, by as much as which the mobile station apparatus fails to respond to the paging signal and the retransmitted paging signal within the first time period, reaches a predetermined number of times, then the first time period is invalidated and the number of times of the paging signal retransmission is decreased from the initial set number during a second time period; and
if the mobile station apparatus responds to the paging signal or the retransmitted paging signal or the mobile station apparatus calls within the second time period, the number of times of the paging signal retransmission is returned to the initial set number, or if the second time period expires without the paging to the mobile station or without the call from the mobile station apparatus, the number of times of the paging signal retransmission is returned to the initial set number.

By thus constituting the mobile communication system, if the mobile station apparatus fails to respond to the paging signal, the number of times of the paging signal retransmission is increased during the first time period so as to increase a response probability for a next paging. If an effect of improving the call probability cannot be expected even by increasing the number of times of the paging signal retransmission, then the number of times of the paging signal retransmission is decreased during the second time period so as to reduce an unnecessary down system load. The number of times of the paging signal retransmission can be thereby optimized.

According to the invention set forth in claim 5, the recording means includes a management table that enables centralizedmanagement of the number of times of the paging signal retransmission for each mobile station apparatus, wherein the management table including at least one of time information on time at which the number of times of the paging signal retransmission is changed, a present value of the number of times of the paging signal retransmission, the number of times of paging failure, the first time period, and the second time period for each mobile station apparatus.

By thus constituting the mobile communication system, parameters related to a setting of the number of times of the paging signal retransmission can be easily preset or changed for each mobile station apparatus.

### [Best Mode for Carrying out the Invention]

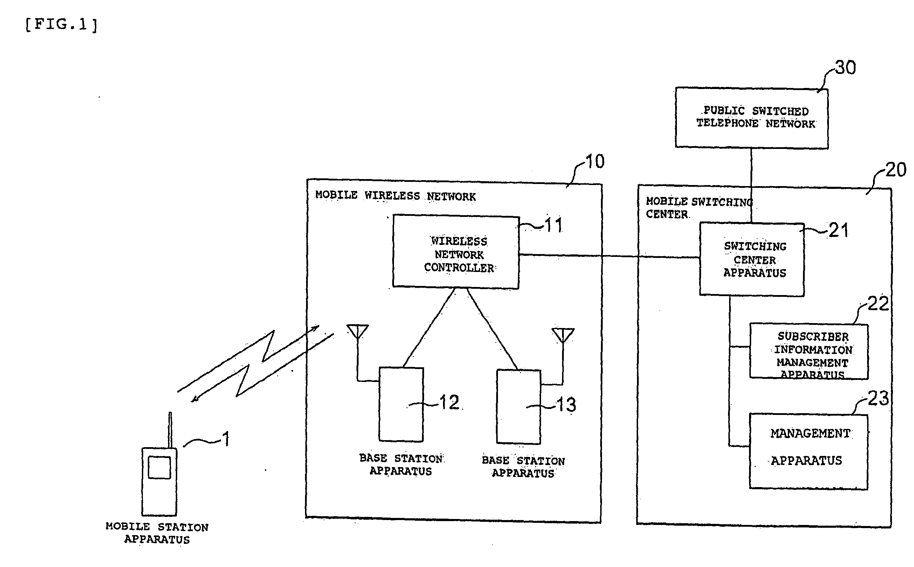

Fig. 1 is a schematic block diagram of a W-CDMA wireless communication system in which a paging control method according to the present invention is carried out.

Amobile station apparatus 1 holds a wireless communication with base station apparatuses 12 and 13 included in a mobile wireless network 10. Each of the base station apparatuses 12 and 13 is connected to a wireless network controller 11 included in the mobile wireless network 10. This wireless network controller 11 is connected to a switching center apparatus 21 included in a mobile switching center 20. This switching center apparatus 21 is also connected to a public switched telephone network 30. This switching center apparatus 21 is further connected to a subscriber information management apparatus 22 and a management apparatus 23 for managing a number of times of a paging signal retransmission.

When a paging request is issued from the public switched telephone network 30 to a certain mobile station apparatus 1 or a paging request is issued from the other mobile station apparatus, not shown, to the certain mobile station apparatus 1 through the base station apparatuses 12 and 13 and the wireless network controller 11, the switching center apparatus 21 transmits a paging signal to the mobile station apparatus 1 through the wireless network controller 11 and the base station apparatuses 12 and 13. If the mobile station apparatus 1 fails to respond to this paging signal, the switching center apparatus 21 retransmits the paging signal to the mobile station apparatus 1 by as much as a predetermined number of times. A result of a response of the mobile station apparatus 1 to the paging signal is transmitted to the switching center apparatus 21 through the base station apparatuses 12 and 13 and the wireless network controller 11, and the response is recorded in the management apparatus 23.

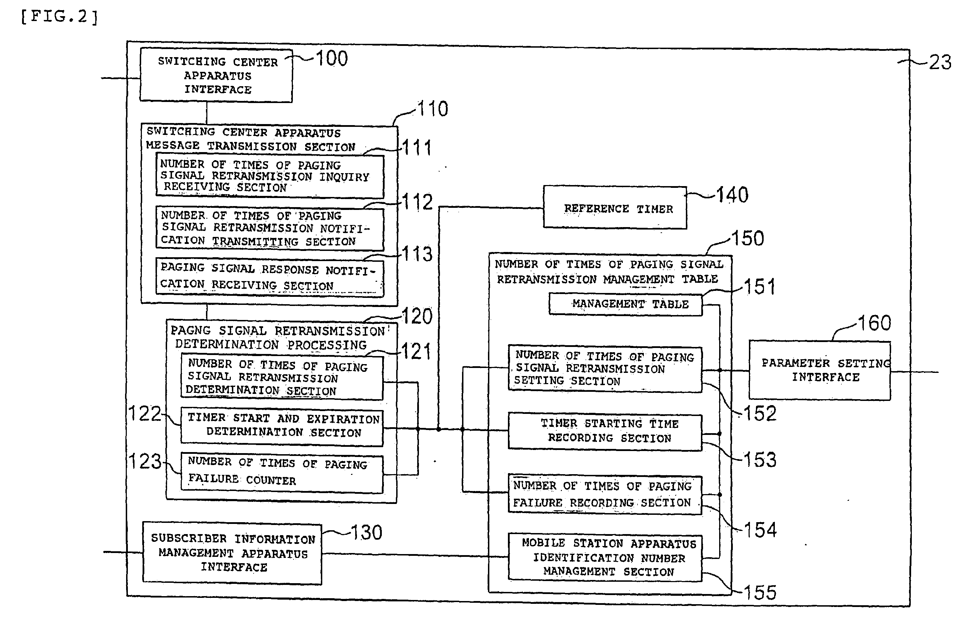

Fig. 2 is a block diagram of the management apparatus 23.

The management apparatus 23 includes a switching center apparatus interface 100, a switching center apparatus message transmission section 110, a paging signal retransmission determination processing section 120, a subscriber information management apparatus interface 130, a reference timer 140, a number-of -times -of retransmission management table 150, and a parameter setting interface 160.

The switching center apparatus interface 100 forms an interface between the switching center apparatus 21 and the management apparatus 23. The switching center apparatus interface 100 receives an inquiry about the number of times of the paging signal retransmission related to the mobile station apparatus 1 from the switching center apparatus 21, notifies the switching center apparatus 21 of the number of times of the paging signal retransmission, and receives a result of the response of the mobile station apparatus 1 to the paging signal or a result of a call from the mobile station apparatus 1 from the switching center apparatus 21.

The switching center apparatus message transmission section 110 is connected to the switching center apparatus interface 100 and includes a number of times of the paging signal retransmission inquiry receiving section 111 that receives the inquiry about the number of times of the paging signal retransmission from the switching center apparatus 21, a number -of -times -of -the -paging -signal retransmission report transmitting section 112 that notifies the switching center apparatus 21 of the number of times of the paging signal retransmission, and a paging signal response notification receiving section 113 that receives a notification of a paging response result.

The paging signal retransmission determination processing section 120 is connected to the switching center apparatus message transmission section 110, the reference timer 140, and the number -of -times -of -the -paging -signal retransmission management table 150. The paging signal retransmission determination processing section 120 includes a number -of -times -of -the -paging -signal retransmission determination section 121 that determines the number of times of the paging signal retransmission, a timer start and expiration determination section 122 that determines whether the reference timer 140 starts or expires, and a number -of -times -of -paging failure counter 123 that counts the number of times of a paging signal failure.

The subscriber information management apparatus interface 130 forms an interface between the subscriber information management apparatus 22 and the management apparatus 23, receives subscriber information on the mobile station apparatus 1 from the subscriber information management apparatus 22, and transmits the subscriber information to a mobile station apparatus identification number management section 155 included in the number -of -times -of retransmission management table 150.

The reference timer 140 is connected to the paging signal retransmission determination processing section 120 and the number -of -times -of retransmission management table 150, and provides time information based on which the number of times of the paging signal retransmission is determined.

The number -of -times -of retransmission management table 150 is connected to the paging signal retransmission determination processing section 120, the subscriber information management apparatus interface 130, the reference timer 140, and the parameter setting interface 160. The number -of -times -of retransmission management table 150 includes a management table 151, a number -of -times -of -paging -signal retransmission determination section 152 that determines the number of times of paging signal retransmission, a timer starting time recording section 153 that records a starting time of the reference timer 140, a number -of -times -of -paging failure recording section 154 that records the number of times of the paging failure, and the mobile station apparatus identification number management section 155 that manages identification number of the mobile station apparatus. The management table 151 is connected to the number -of -times -of -paging -signal retransmission determination section 152, the timer starting time recording section 153, the number -of -times -of -paging failure recording section 154, and the mobile station apparatus identification number management section 155. The management table 151 stores parameters related to the number of times of the paging signal retransmission in the form of a parameter setting table.

The parameter setting interface 160 forms an interface between an external apparatus and the number -of -times -of -paging -signal retransmission determination section 152, and make the predetermined parameters for the number of times of the paging signal retransmission settable and changeable.

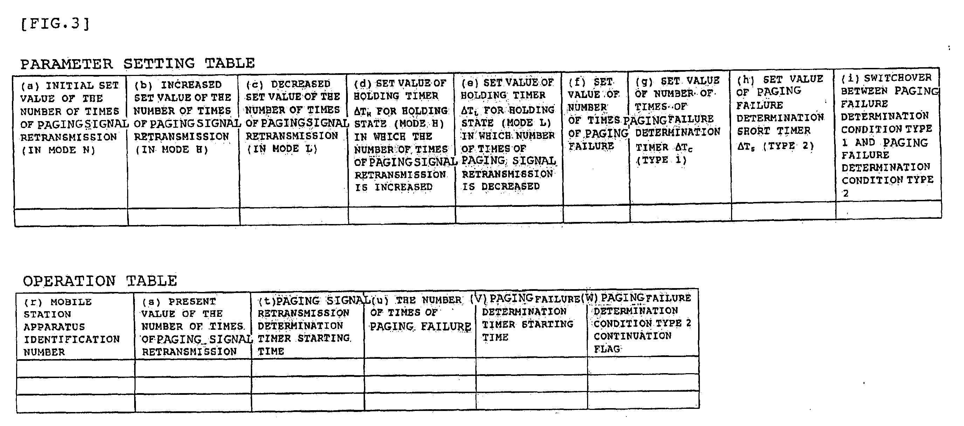

Fig. 3 shows an example of the parameters included in the management table 151 in the number -of -times -of retransmission management table 150.
(a) An initial set value of the number of times of the paging signal retransmission (in a mode N) is the number of times of the paging signal retransmission in the mode N in which the number of times of the paging signal retransmission is the initial set value.
(b) An increased set value of the number of times of the paging signal retransmission (in a mode H) is the number of times of the paging signal retransmission in the mode H in which the number of times of the paging signal retransmission is greater than the initial set value.
(c) A decreased set value of the number of times of the paging signal retransmission (in a mode L) is the number of times of the paging signal retransmission in the mode L in which the number of times of the paging signal retransmission is smaller than the initial set value.
(d) A set value of a holding timer ΔT_{H} that holds the state (mode H) in which the number of times of the paging signal retransmission is increased, is a time period AT_{H} for holding the mode H.
(e) A set value of a holding timer ΔT_{L} that holds the state (mode L) in which the number of times of the paging signal retransmission is decreased, is a time period ΔT_{L} for holding the mode L.
(f) A set value of the number of times of the paging failure determination is the number of times set for determining whether the paging fails, and the paging failure is counted once when the mobile station apparatus 1 fails to respond to the paging signal and the retransmitted paging signal.
(g) A set value of a number -of -times -of -paging failure determination timer ΔT_{C} (a type 1) is a time period for determining that the paging fails when the number of times of the paging failure reaches a set number within this time period ΔT_{C}.
(h) A set value of a paging failure determination short timer ΔT_{S} (a type 2) is a time period for determining whether the paging fails within this short time period ΔT_{S}, and the type 2 is used for determining whether the paging fails once within this time period ΔT_{S}.
(i) Switchover between a paging failure determination condition type 1 and a paging failure determination condition type 2 indicates that the type is the type 1 or the type 2.

These parameters (a) to (i) are set to management apparatus 23 in advance.

The following parameters are also included in the management table 151.
(r) A mobile station apparatus identification number, which is an identification number of the target mobile station apparatus 1 to be read from the subscriber information management apparatus 22.
(s) A present value of the number of times of the paging signal retransmission, which is the present number of times of the paging signal retransmission of the target mobile station apparatus 1.
(t) Starting time of a paging signal retransmission determination timer, which is a time at which the paging signal retransmission determination timer starts.
(u) The number of times of the paging failure, which is the number of times by which a paging to the mobile station apparatus 1 fails.
(v) Starting time of a paging failure determination timer, which is a time at which the paging failure determination timer starts.
(w) A continuation flag of paging failure determination condition type 2, which is a flag that is set on when the type 2 is continued to determine whether the paging fails, and that is set off when the type 2 is not continued.

These parameters (r) to (w) are not set to the apparatus 23 in advance but dynamically changed according to a situation of the apparatus 23.

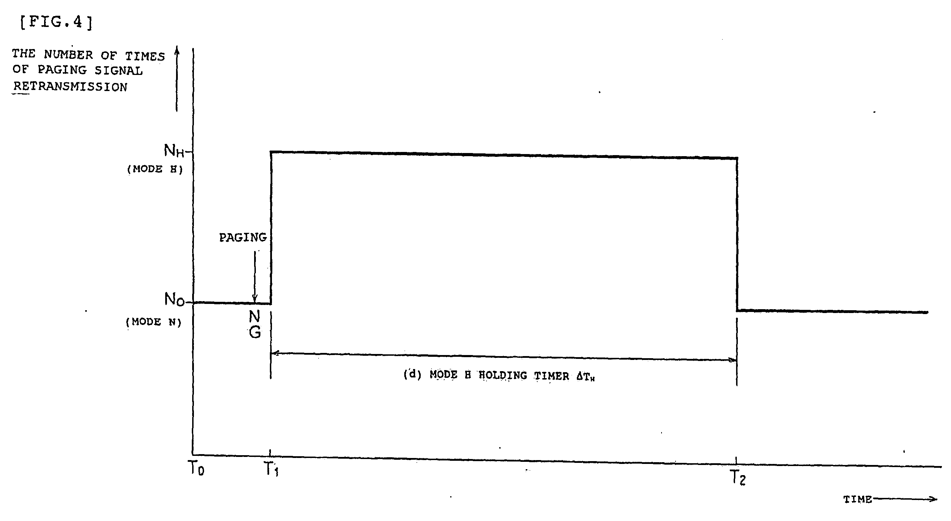

Referring next to Figs. 4 to 8, a method of changing the number of times of paging signal retransmission, based on the response of the mobile station apparatus 1 to the paging signal or the call from the mobile station apparatus 1, will be described.

In Figs. 4 to 8, a vertical axis represents the number of times of the paging signal retransmission and a horizontal axis represents time.

Fig. 4 is a chart showing a state, in which the mode N is changed to the mode H, the mode H holding timer expires, and the mode H is back to the mode N.

The paging starts at a time T₀, and the number of times of the paging signal retransmission is set at the initial set value No (e.g., 2) (the mode N). A paging signal is transmitted to the mobile station apparatus 1. If the mobile station apparatus 1 fails to respond to the paging signal, the paging signal is retransmitted to the apparatus 1 by as much as the times of the initial set value (e. g., twice). Namely, the paging signal is transmitted to the mobile station apparatus 1 once, and then retransmitted to the apparatus 1 twice.

If the mobile station apparatus 1 fails to respond even to the paging signal transmitted or retransmitted thereto three times, then the state is changed to the state (mode H) in which the number of times of the paging signal retransmission is increased to N_{H} (e.g., 3) at a time T₁, so as to increase a response probability that the mobile station apparatus 1 responds to the next paging signal. On the occasion of the change to the mode H, the mode H holding timer ΔT_{H} (e.g., 30-minute timer) starts.

While this holding timer ΔT_{H} operates (during a first time period from the time T₁ to the time T₂), the mode H is held. If the mobile station apparatus 1 is not paged or the mobile station apparatus 1 does not call within this first time period, and this holding timer ΔT_{H} expires at the time T₂, the mode H is back to the mode N.

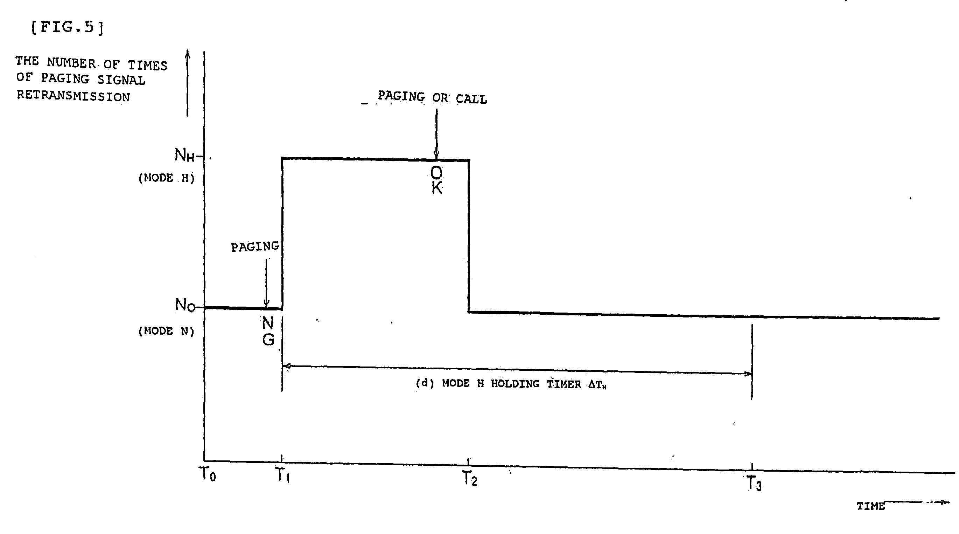

Fig. 5 is a chart showing a state, in which the mode N is changed to the mode H, the paging to the mobile station apparatus 1 or the call from the mobile station apparatus 1 succeeds in the mode H, and the mode H is back to the mode N.

Similarly to Fig. 4, the paging starts at the time T₀ in the initial state of the mode N. Since the mobile station apparatus 1 fails to respond to the paging, the mode N is changed to the mode H at the time T₁, and the mode H holding timer ΔT_{H} starts (during the first time period from the time T₁ to a time T₃) .

While this holing timer ΔT_{H} operates, if the mobile station apparatus 1 is paged again and the paging to the mobile station apparatus 1 or the call from the apparatus 1 succeeds, the mode H is back to the mode N at the time T₂.

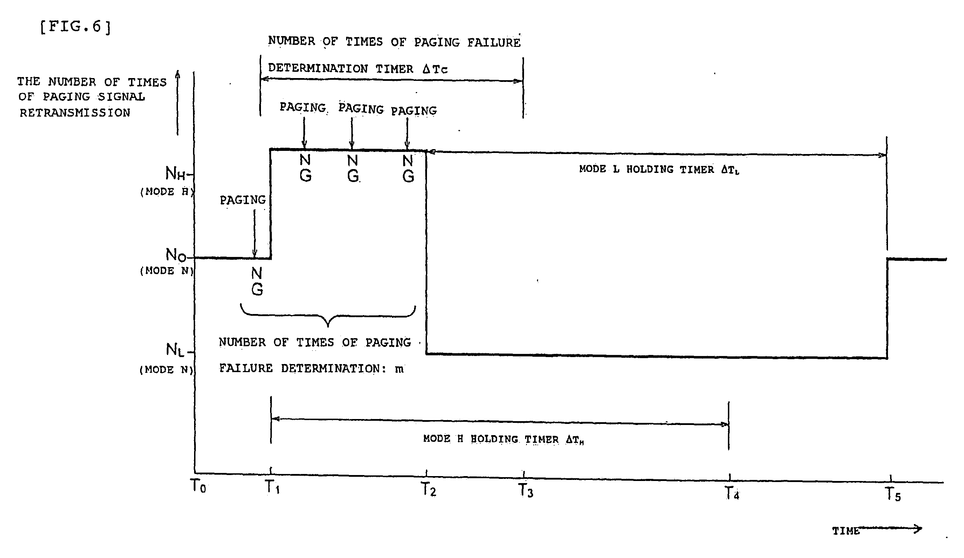

Fig. 6 is a chart showing a state, in which the mode N is changed to themode H, the paging to the mobile station apparatus 1 fails by as much as the set number of times in the mode H, the mode H is changed to the mode L, the mode L holding timer expires, and the mode L is back to the mode N. In addition, an example shown in Fig. 6 determines the number of times of the paging failure in the mode H by type 1.

Similarly to Fig. 4, the paging starts at the time T₀ in the initial state of the mode N. Since the mobile station apparatus 1 fails to respond to the paging signal, the mode N is changed to the mode H at the time T₁, at which time the mode H holding timer ΔT_{H} starts (during the first time period from the time T₁ to the time T₄) . At the same time, the number -of -times -of -paging failure determination timer ΔT_{C} starts (during the time period from the time T₁ to the time T₃) . If the number of times of the paging failure reaches the set number while the number -of -times -of -paging failure determination timer ΔT_{C} operates, the effect of increasing the response probability cannot be expected even by increasing the number of times of the paging signal retransmission. This number -of -times -of -paging failure determination timer ΔT_{C} is, therefore, intended to change the mode to the mode L which decrease the number of times of the paging signal retransmission so as to reduce the unnecessary down system load.

While the number -of -times -of -paging failure determination timer ΔT_{C} operates, the mobile station apparatus 1 is paged again and the paging to the apparatus 1 fails by a much as the set number of times (three in the example of Fig. 6). Therefore, at the time T₂, the mode H is changed to the mode L, and the mode L holding timer ΔT_{L} starts (during a second time period from the time T₂ to a time T₅, the timer ΔT_{L} is, for example, a 30-minute timer). At this time, the mode H holding timer ΔT_{H}, which operates and does not expire, yet is invalidated.

While this mode L holding timer ΔT_{L} operates, there is no paging or call and the holding timer ΔT_{L} expires at a time T₅, thus the mode L is back to the mode N.

Fig. 7 shows a state similar to the state of Fig. 6. Fig. 7 shows the state of the type 2 using paging failure determination short timers ΔT_{S1}, ΔT_{S2}, and ΔT_{S3} instead of the number -of -times -of -paging failure determination timer ΔT_{C} in the state of the mode H.

In the state of the mode H starting at the time T₁, the mobile station apparatus 1 is paged again. Whenever the paging fails, the paging failure determination short timers ΔT_{S1}, ΔT_{S2}, and ΔT_{S3} are newly operated.

Fig. 8 shows a state, in which the mode N is changed to the mode H, the paging fails by the set number of times in the mode H, the mode H is changed to the mode L, the paging or the call succeeds in the mode L, and in which the mode L is back to the mode N.

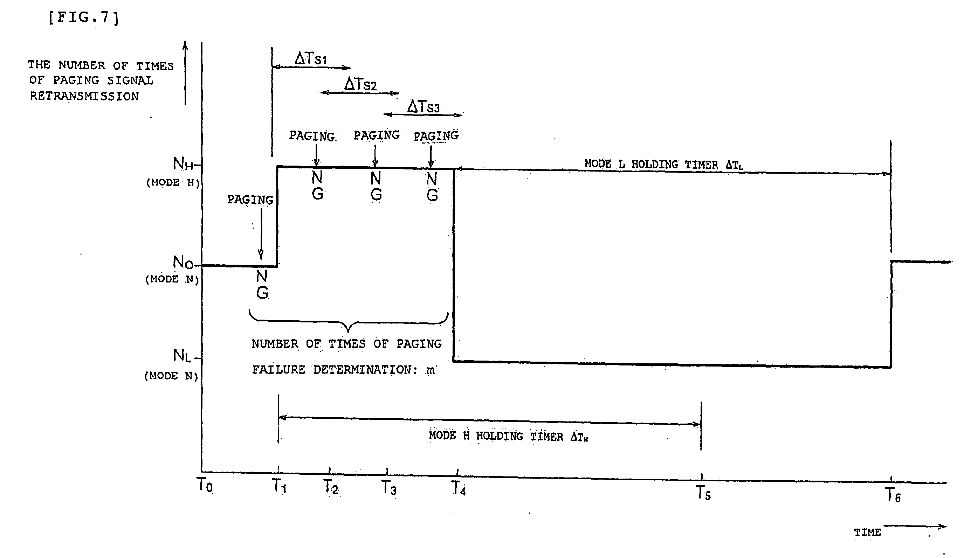

As shown in Figs. 6 and 7, since the paging fails by the number of times set in the mode H, the mode H is changed to the mode L at the time T₂.

When the paging or the call succeeds while the mode L holding timer ΔT_{L} operates on the occasion of the change to the mode L (during the second time period from the time T₂ to the time T₅), the mode L is changed to the mode N at the time T₃.

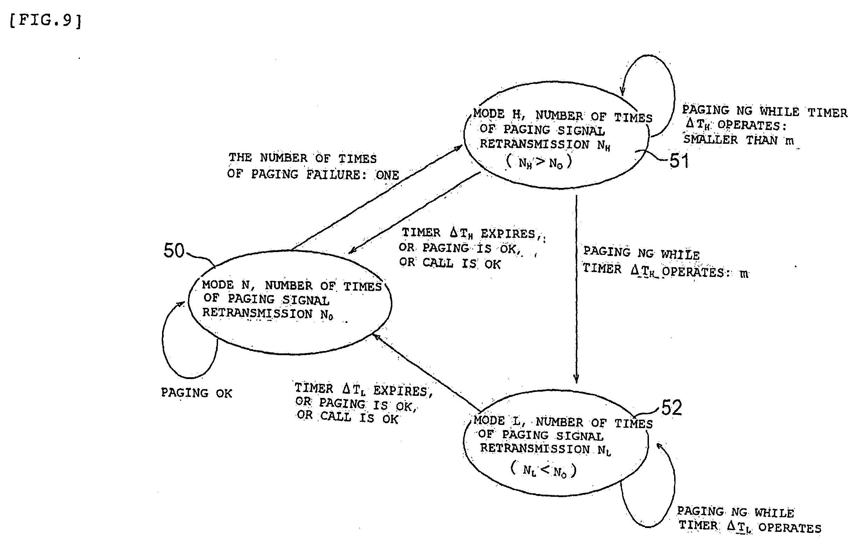

Fig. 9 collectively shows a state transition among the modes shown in Figs. 4 to 8.

As shown in Fig. 9, the states include the mode N (the number of times of the paging signal retransmission N₀) 50, the mode H (the number of times of the paging signal retransmission N_{H}, where N_{H}>N₀) 51, and the mode L (the number of times of the paging signal retransmission N_{L}, where N_{L}<N₀) 52.

If the paging succeeds, the state of the mode N is held. If the paging fails, the mode N is changed to the mode H. While the mode H holding timer ΔT_{H} operates, this mode H is held. When the mode H holding timer ΔT_{H} expires or the paging or the call succeeds, the mode H is changed to the mode N. If the paging fails by as much as the set number while the holding timer ΔT_{H} operates in the mode H, the mode H is changed to the mode L. This mode L is held while the mode L holding timer ΔT_{L} operates. However, when the mode L holding timer ΔT_{L} expires or the paging or the call succeeds, the mode L is changed to the mode N.

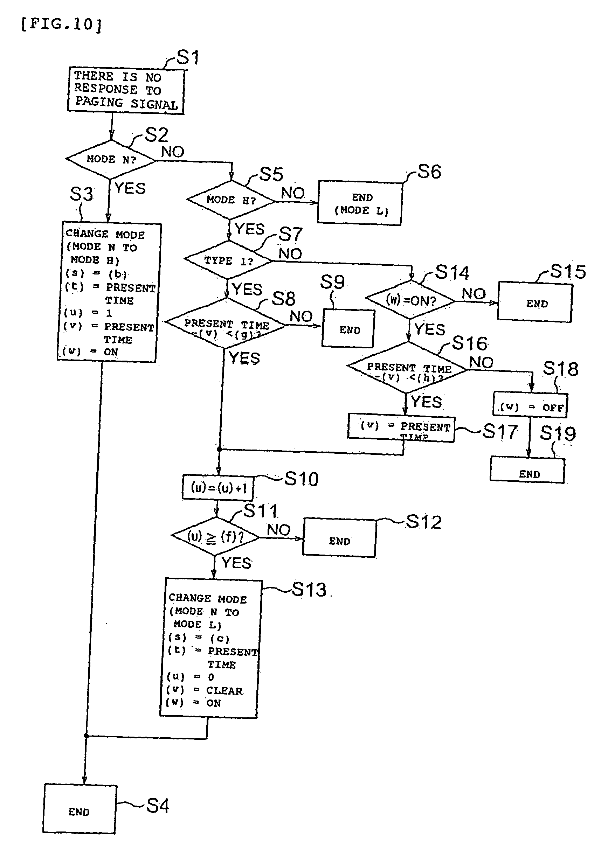

Figs. 10 to 12 show an example of processing flows executed by the management apparatus 23 for managing the number of times of the paging signal retransmission.

Fig. 10 shows an example of the processing flow executed by the management apparatus 23 when the apparatus 23 receives a notification that there is no response to the paging signal.

At a step S1, the management apparatus 23 receives the notification that there is no response to the paging signal. At a step S2, the apparatus 23 determines whether the mode of the target mobile station apparatus 1 is the mode N. If determining at the step S2 that the mode of the apparatus 1 is the mode N, the apparatus 23 changes the mode N to the mode H at a step S3. At this time, the parameters included in the management table 151 shown in Fig. 3 are set as follows. The present value (s) of the number of times of the paging signal retransmission is set at the increased set value (b) of the number of times of the paging signal retransmission. The starting time (t) of the paging signal retransmission determination timer is set at the present time. The number of times of the paging failure (u) is set at one. The starting time (v) of the call failure determination timer is set at the present time. The continuation flag (w) of paging failure determination condition type 2 is set on. Thereafter, this processing is finished at a step S4.

If it is determined at the step S2 that the mode of the apparatus 1 is not the mode N, the management apparatus 23 determines whether the mode of the apparatus 1 is the mode H at a step S5. If it is determined that the mode of the apparatus 1 is not the mode H, the mode of the apparatus 1 is the mode L, and this processing is finished at a step S6.

If it is determined at the step S5 that the mode of the apparatus 1 is the mode H, the apparatus 23 determines whether the type of the paging failure determination condition is the type 1 at a step S7.

If it is determined at the step S7 that the type of the paging failure determination condition is the type 1, the management apparatus 23 determines at a step S8 whether the time from the starting time (v) of the paging failure determination timer to the present time exceeds the set value (g) of the number -of -times -of -paging failure determination timer ΔT_{C} of the type 1. If it is determined at the step S8 that the time exceeds the set value (g) of the number -of -times -of -paging failure determination timer ΔT_{C} of the type 1, this processing is finished at a step S9.

If it is determined at the step S8 that the time does not exceed the set value (g) of the number -of -times -of -paging failure determination timer ΔT_{C} of the type 1, the management apparatus 23 increments the number of times of the paging failure (u) by one at a step S10 . At a step S11, the apparatus 23 determines whether the number of times of the paging failure (u) is equal to or greater than the set value of the number of times of the paging failure determination (f). If it is determined at the step S11 that the number of times of the paging failure (u) is smaller than the set value of the number of times of the paging failure determination (f), this processing is finished at a step S12.

If it is determined at the step S11 that the number of times of the paging failure (u) is equal to or greater than the set value of the number of times of the paging failure determination (f), the apparatus 23 changes the mode H to the mode L at a step 13. At this time, the parameters included in the management table 151 are set as follow. The present value (s) of the number of times of the paging signal retransmission is set at the decreased set value (c) of the number of times of the paging signal retransmission. The starting time (t) of the paging signal retransmission determination timer is set at the present time. The number of times of the paging failure (u) is set at zero. The starting time (v) of the paging failure determination timer is cleared. The continuation flag (w) of the paging failure determination condition type 2 is set off. Thereafter, this processing is finished at the step S4.

If it is determined at the step S7 that the type is not the type 1, the management apparatus 23 determines whether the continuation flag (w) of the paging failure determination condition type 2 is set on at a step S14. If the apparatus 23 determines at the step S14 that the continuation flag (w) of the paging failure determination condition type 2 is not set on, this processing is finished at a step S15.

If it is determined at the step S14 that the continuation flag (w) of the paging failure determination condition type 2 is set on, the apparatus 23 determines whether the time from the starting time (v) of the paging failure determination timer to the present time exceeds the set value (h) of the paging failure determination short timer ΔT_{S} of the type 2 at a step S16.

If it is determined at the step S16 that the time does not exceed the set value (h) of the paging failure determination short timer ΔT_{S} of the type 2, the apparatus 23 sets the starting time (v) of the paging failure determination timer at the present time at the step S17 and the processing goes to the step S10. If it is determined at the step S16 that the time exceeds the set value (h) of the paging failure determination short timer ΔT_{S} of the type 2, the apparatus 23 sets the continuation flag (w) of the paging failure determination condition type 2 off at a step S18, and finishes this processing at a step S19.

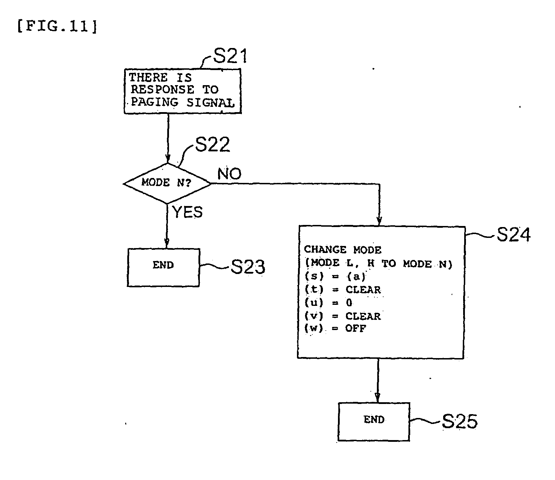

Fig. 11 shows an example of the processing flow executed by the management apparatus 23 when receiving the notification that there is a response to the paging signal.

At a step S21, the management apparatus 23 receives the notification that there is a response to the paging signal. At a step S22, the apparatus 23 determines whether the mobile station apparatus 1 is in the mode N. If it is determined at the step S22 that the apparatus 1 is in the mode N, this processing is finished at a step S23. If determining at the step S22 that the apparatus 1 is not in the mode N, the management apparatus 23 changes the mode H or the mode L to the mode N at a step S24. At this time, the parameters included in the management table 151 are set as follows. The present value (s) of the number of times of the paging signal retransmission is set at the initial set value (a) of the number of times of the paging signal retransmission. The starting time (t) of the paging signal retransmission determination timer is cleared. The number of times of the paging failure (u) is set at zero. The starting time (v) of the paging failure determination timer is cleared. The continuation flag (w) of the paging failure determination condition type 2 is set off. Thereafter, this processing is finished at a step S25.

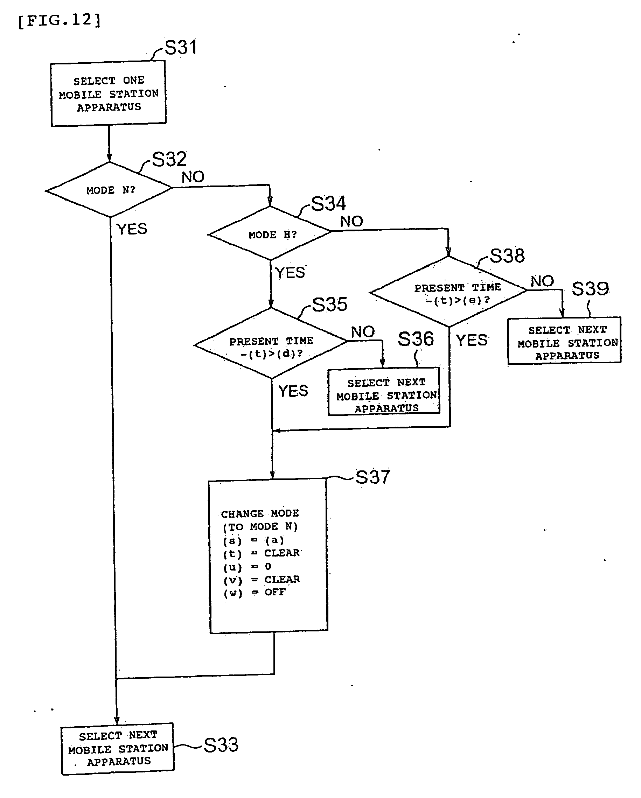

Fig. 12 shows an example of the processing flow executed by the management apparatus 23 for constantly monitoring the number of times of the paging signal retransmission for each mobile station apparatus 1 (each user).

At a step S31, the apparatus 23 selects one mobile station apparatus. At a step S32, the apparatus 23 determines whether the selected mobile station apparatus is in the mode N. If it is determined at the step S32 that the mobile station apparatus is in the mode N, the apparatus 23 selects the next mobile station apparatus at a step S33.

If it is determined at the step S32 that the selected mobile station apparatus is not in the mode N, the apparatus 23 determines whether the selected mobile station apparatus is in the mode H at a step S34.

If it is determined at the step S34 that the selected mobile station apparatus is in the mode H, the apparatus 23 determines whether the time from the starting time (t) of the paging signal retransmission determination timer to the preset time exceeds the set value (d) of the mode H holding timer ΔT_{H} at a step S35. If it is determined at the step S35 that the time does not exceed the set value of the mode H holding timer ΔT_{H}, the apparatus 23 selects the next mobile station apparatus at a step S36.

If it is determined at the step S35 that the time exceeds the set value of the mode H holding timer ΔT_{H}, the apparatus 23 changes the mode H to the mode N at a step S37. At this time, the parameters included in the management table 155 are set as follows. The present value (s) of the number of times of the paging signal retransmission is set at the initial set value (a) of the number of times of the paging signal retransmission. The starting time (t) of the paging signal retransmission determination timer is cleared. The number of times of the paging failure (u) is set at zero. The starting time (v) of the paging failure determination timer is cleared. The continuation flag (w) of the paging failure determination condition type 2 is set off. Thereafter, the apparatus 23 selects the next mobile station apparatus at a step S33.

If it is determined at the step S34 that the mode of the selectedmobile station apparatus is not the mode H, the apparatus 23 determines whether the time from the starting time (t) of the paging signal retransmission determination timer to the present time exceeds the set value (e) of the mode L holding timer ΔT_{L} at a step S38.

If it is determined at the step S38 that the time exceeds the set value (e) of the mode L holding timer ΔT_{L}, the processing goes to the step S37 and the mode is changed to the mode N. If it is determined at the step S38 that the time does not exceed the set value (e) of the mode L holding timer ΔT_{L}, the apparatus 23 selects the next mobile station apparatus at a step S39.

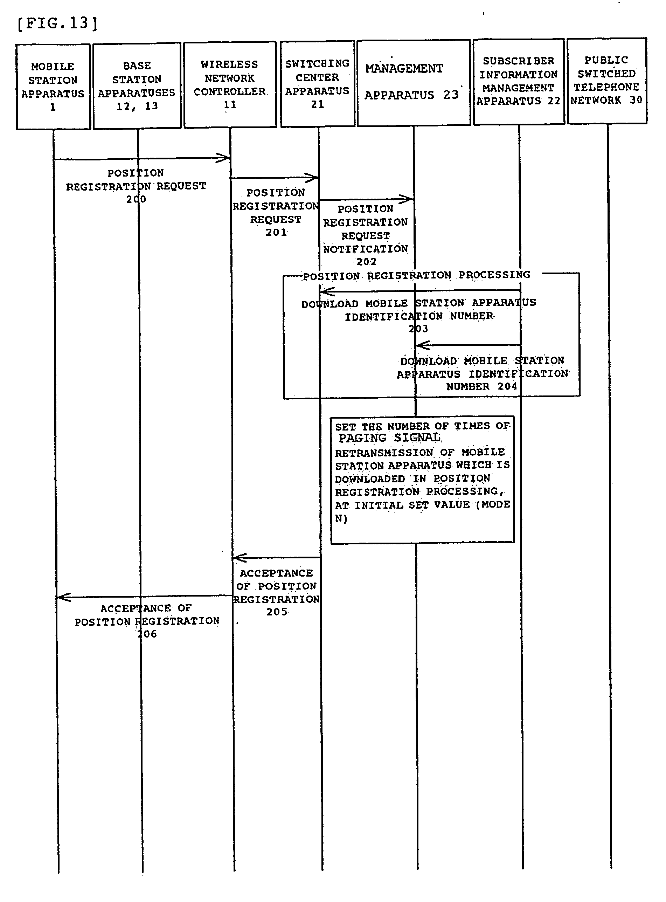

Figs. 13 to 22 show sequences for the paging control method for the mobile station apparatus capable of changing the number of times of the paging signal retransmission according to the present invention.

Fig. 13 shows the sequence in an initial state.

When the mobile station apparatus 1 turns communicable with the mobile wireless network 10, the apparatus 1 transmits a position registration request to the wireless network controller 11 through the base station apparatuses 12 and 13 (at 200). The wireless network controller 11 transmits this position registration request to the switching center apparatus 21 in the mobile switching center 20 (at 201). The switching center apparatus 21 notifies the management apparatus 23 of reception of the position registration request from the mobile station apparatus 1 (at 202).

The switching center apparatus 21 downloads the mobile station apparatus identification number of the mobile station apparatus 1 that issues the position registration request from the subscriber information management apparatus 22 (at 203). The management apparatus 23 also downloads the mobile station apparatus identification number of the mobile station apparatus 1 that issues the position registration request from the subscriber information management apparatus 22 (at 204) and sets the mode of this mobile station apparatus 1 at the mode N.

Thereafter, the switching center apparatus 21 notifies the wireless network controller 11 of acceptance of position registration of the mobile station apparatus 1 (at 205). The wireless network controller 11 notifies the mobile station apparatus 1 of the acceptance of the position registration through the base station apparatuses 12 and 13 (at 206).

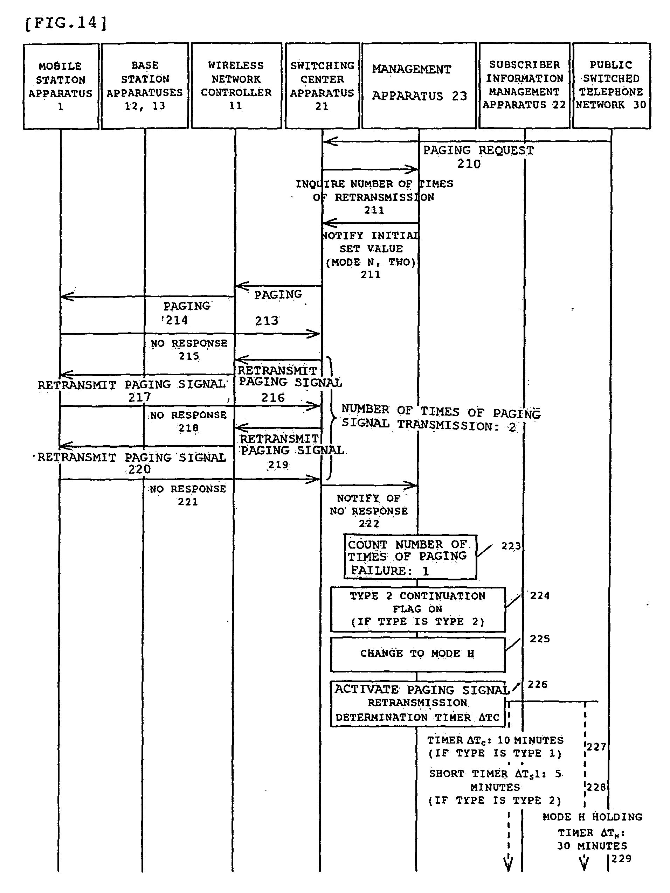

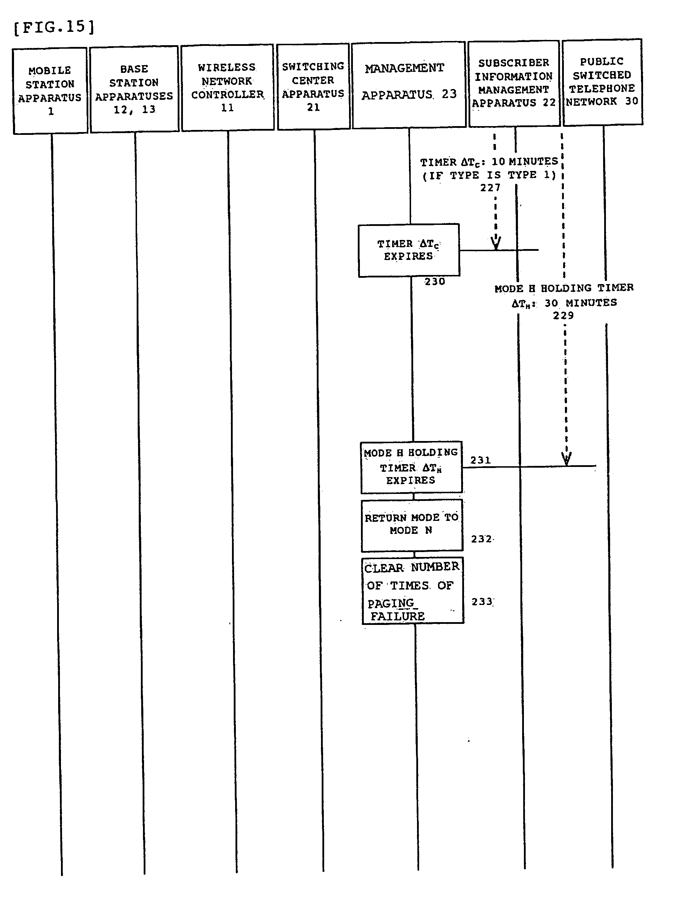

Figs. 14 and 15 show the sequences in the state shown in Fig. 4, in which the mode N is changed to the mode H, the mode H holding timer expires, and in which the mode H is back to the mode N.

The paging request to the mobile station apparatus 1 is transmitted to the switching center apparatus 21 through the public switched telephone network 30 (at 210). The switching center apparatus 21 that receives the paging request inquires the management apparatus 23 about the number of times of the paging signal retransmission related to the mobile station apparatus 1 for which the paging request is issued (at 211). The management apparatus 23 notifies the switching center apparatus 21 of the number of times of the paging signal retransmission related to the mobile station apparatus (at 212). In the example shown in Fig. 14, the mobile station apparatus 1 is in the mode N, and the number of times of the paging signal retransmission is the initial set value of two.

The switching center apparatus 21 requests the wireless network controller 11 to page the mobile station apparatus 1 (at 213). The wireless network controller 11 pages the mobile station apparatus 1 through the base station apparatuses 12 and 13 (at 214). The switching center apparatus 21 is notified that there is no response of the mobile station apparatus 1 (at 215).

Although the switching center apparatus 21 retransmits the paging signal by as much as the initial set value of two (at 216 to 220), the switching center apparatus 21 is notified that there is no response of the mobile station apparatus 1 (at 221). The switching center apparatus 21 notifies the management apparatus 23 that there is no response of the mobile station apparatus 1 (at 222).

The management apparatus 23 sets the number of times of the paging failure (u) of the mobile station apparatus 1 at one (at 223). If the type of the paging failure determination condition is the type 2, the continuation flag (w) of the paging failure determination condition type 2 is set on (at 224) and the mode of the mobile station apparatus 1 is changed to the mode H (at 225). In the example of Fig. 14, the number of times of the paging signal retransmission of two in the mode N is changed to three in the mode H.

In response to the change to the mode H, the paging signal retransmission determination timer is activated (at 226). If the type is the type 1, the number -of -times -of -paging failure determination timer ΔT_{C} is activated (at 227) . If the type is the type 2, the paging failure determination short timer ΔT_{S1} is activated (at 228). At the same time, the mode H holding timer ΔT_{H} is activated (at 229). In the example of Fig. 14, an expiration time of the number -of -times -of -paging failure determination timer ΔT_{C} is ten minutes, that of the paging failure determination short timer ΔT_{S1} is five minutes, and that of the mode H holding timer ΔT_{H} is 30 minutes.

The expiration time of ten minutes of the number -of -times -of -paging failure determination timer ΔT_{C} passes (at 230), and the expiration time of 30 minutes of the mode H holding timer ΔT_{H} passes (at 231). In response to the expiration, the management apparatus 23 returns the mode of the mobile station apparatus 1 to the mode N (sets the number of times of the paging signal retransmission back to the initial set value of two) (at 232), and clears the number of times of the paging failure (u) (at 233).

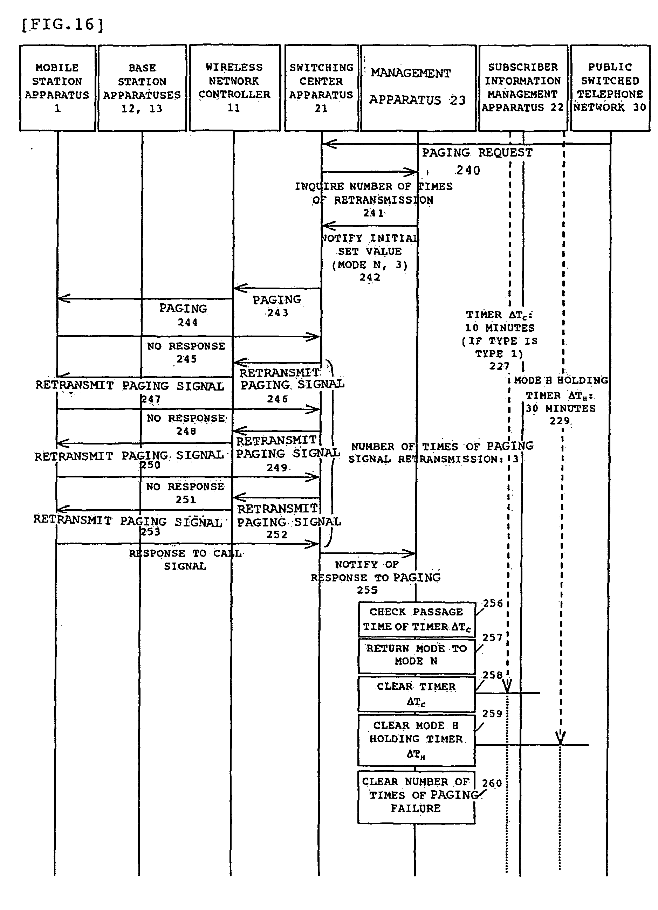

Fig. 16 shows the sequence in the state shown in Fig. 5 in which the paging or the call succeeds in the mode H and the mode H is back to the mode N.

The sequence shown in Fig. 16 starts from a state, in which the mode of the mobile station apparatus 1 is changed to the mode H (at 225) and in which the paging signal retransmission determination timer is activated (at 226) in the sequence shown in Fig. 14.

The paging request to the mobile station apparatus 1 is transmitted to the switching center apparatus 21 through the public switched telephone network 30 (at 240). Similarly to the sequence shown in Fig. 14, the switching center apparatus 21 inquires the management apparatus 23 about the number of times of the paging signal retransmission (at 241). Since the mobile station apparatus 1 is in the mode H, the switching center apparatus 21 is notified of the increased set value (at 242). In the example shown in Fig. 16, the increased set value of the number of times of the paging signal retransmission is three.

The switching center apparatus 21 transmits the paging signal (at 243 and 244), and retransmits the paging signal (at 246 to 253) to the mobile station apparatus 1. If the mobile station apparatus 1 responds to the paging signal retransmitted the third time (at 254), the switching center apparatus 21 notifies the management apparatus 23 that there is a response of the mobile station apparatus 1 (at 255).

The management apparatus 23 checks a passage time of the paging signal retransmission determination timer (at 256), returns the mode of the mobile station apparatus 1 to the mode N (at 257), clears the number -of -times -of -paging failure determination timer ΔT_{C} (at 258), clears the mode H holding timer ΔT_{H} (at 259), and clears the number of times of the paging failure (at 260).

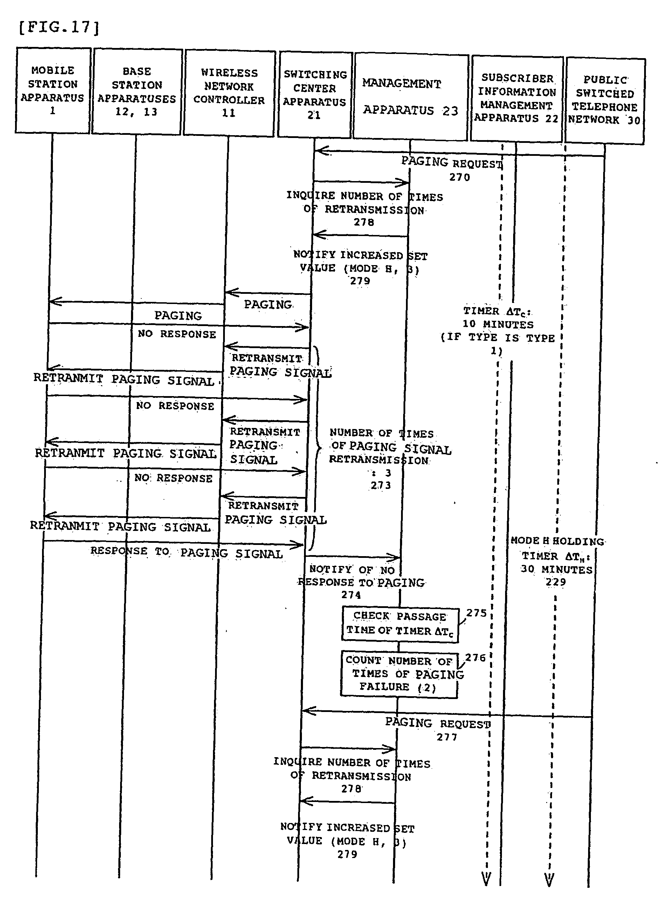

Figs. 17 to 19 show sequences in the state shown in Fig. 6 in which the mode N is changed to the mode H, the paging fails by as much as the set number of times in the mode H, the mode H is changed to the mode L, the mode L holding timer expires, and in which the mode L is back to the mode N.

The sequences shown in Figs. 17 to 19 start from the state in which the mode of the mobile station apparatus 1 is changed to the mode H (at 225) and in which the paging signal retransmission determination timer is activated (at 226) in the sequence shown in Fig. 14.

The paging request to the mobile station apparatus 1 is transmitted to the switching center apparatus 21 through the public switched telephone network 30 (at 270). The switching center apparatus 21 inquires the management apparatus 23 about the number of times of the paging signal retransmission (at 271). Since the mobile station apparatus 1 is in themode H, the switching center apparatus 21 is notified of the increased set value (at 272).

The switching center apparatus 21 transmits the paging signal to the mobile station apparatus 1, retransmits the paging signal thereto by as much as the increased set number, and is notified that the mobile station apparatus 1 fails to respond to the paging signal (at 273). The switching center apparatus 21 notifies the management apparatus 23 that there is no response of the mobile station apparatus 1 (at 274).

The management apparatus 23 checks a passage time of the paging signal retransmission determination timer (at 275), and sets the number of times of the paging failure at two (at 276).

The paging request to the mobile station apparatus 1 is transmitted again to the switching center apparatus 21 through the public switched telephone network 30 (at 277). The switching center apparatus 21 inquires the management apparatus 23 about the number of times of the paging signal retransmission (at 278). Since the mobile station apparatus 1 is in the mode H, the switching center apparatus 21 is notified of the increased set value (at 279).

The switching center apparatus 21 transmits the paging signal to the mobile station apparatus 1 and retransmits the paging signal thereto by as much as the increased set number of times (at 280), and is notified that the mobile station apparatus 1 fails to respond to the paging signal. The switching center apparatus 21 notifies the management apparatus 23 that there is no response of the mobile station apparatus 1 (at 281).

The management apparatus 23 checks a passage time of the paging signal retransmission determination timer (at 282), and sets the number of times of the paging failure at three (at 283). Since the number of times of the paging failure of three is the set number of times of the paging failure, the management apparatus 23 changes the mode of the mobile station apparatus 1 to the mode L (at 284), clears the number -of -times -of -paging failure determination timer ΔT_{C} (at 285), clears the mode H holding timer ΔT_{H} (at 286), and clears the number of times of the paging failure (at 287).

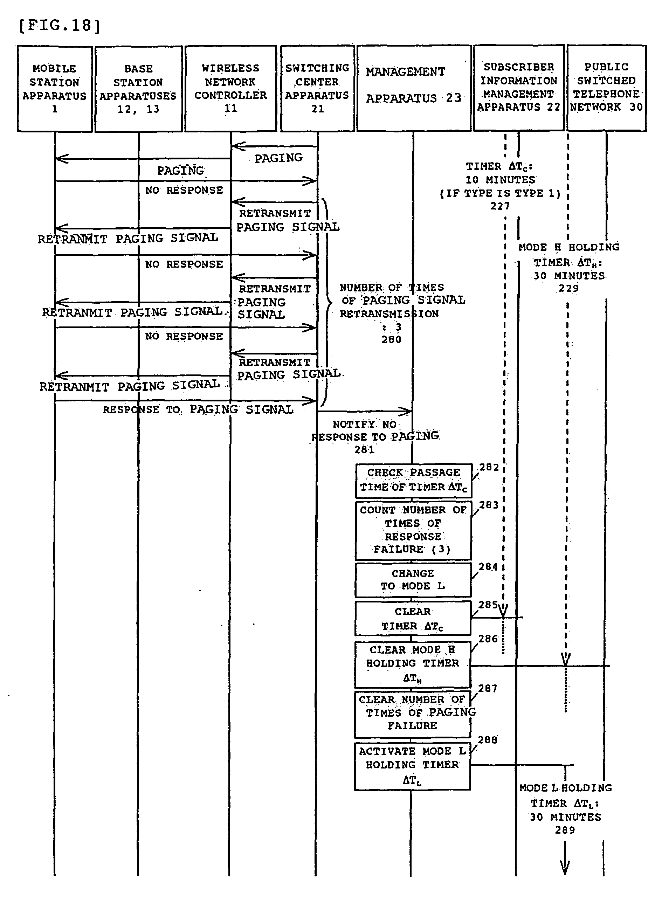

Moreover, the mode L holding timer ΔT_{L} is activated (at 288). In the example of Fig. 18, an expiration time of the mode L holding timer ΔT_{L} is 30 minutes.

The expiration time of 30 minutes of the mode L holding timer ΔT_{L} passes (at 290). In response to the expiration, the management apparatus 23 sets the mobile station apparatus 1 back to the mode N (at 291).

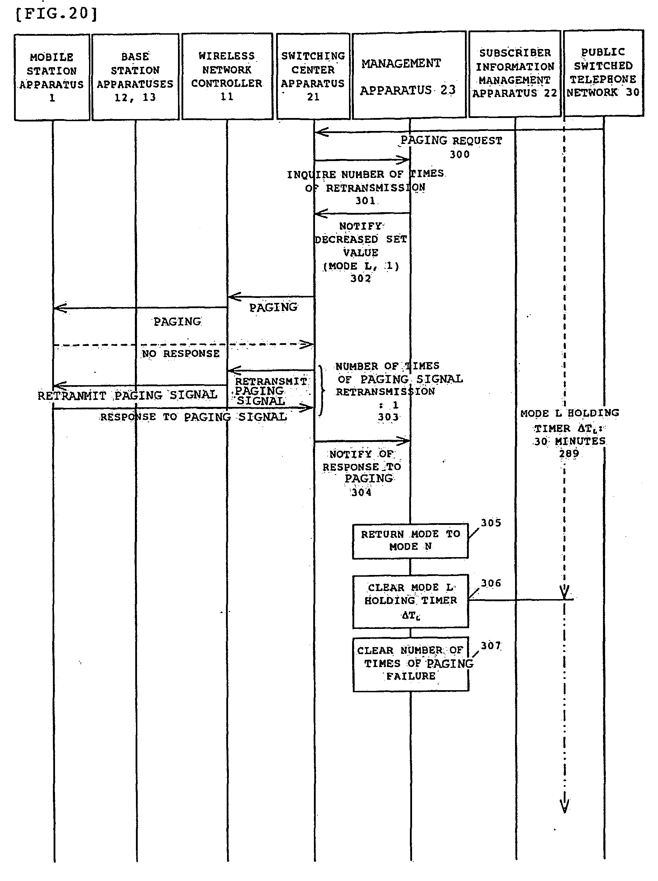

Fig. 20 shows a sequence in which the mobile station apparatus 1 successfully responds to the paging signal in the mode L and the mode L is changed to the mode N in the sequences shown in Figs. 17 to 19.

The sequence shown in Fig. 20 starts from the state, in which the mode of the mobile station apparatus 1 in Fig. 18 is changed to the mode L (at 284) and the mode L holding timer ΔT_{L} is activated (at 288).

The paging request to the mobile station apparatus 1 is transmitted to the switching center apparatus 21 through the public switched telephone network 30 (at 300). The switching center apparatus 21 inquires the management apparatus 23 about the number of times of the paging signal retransmission (at 301). Since themobile station apparatus 1 is in themode L, the switching center apparatus 21 is notified of the decreased set value (at 302).

The switching center apparatus 21 transmits the paging signal to the mobile station apparatus 1, retransmits one paging signal thereto by as much as the decreased set number (at 303), and is notified that the mobile station apparatus 1 responds to the paging signal. The switching center apparatus 21 notifies the management apparatus 23 that there is a response of the mobile station apparatus 1 (at 304).

The management apparatus 23 sets the mobile station apparatus 1 back to the mode N (at 305), clears the mode L holding timer ΔT_{L} (at 306), and clears the number of times of the paging failure (at 307).

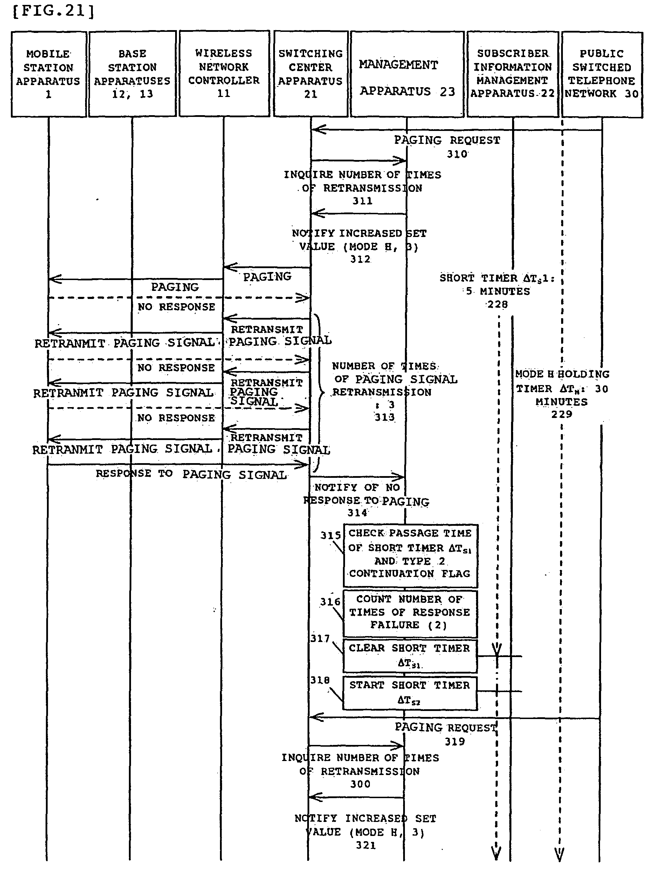

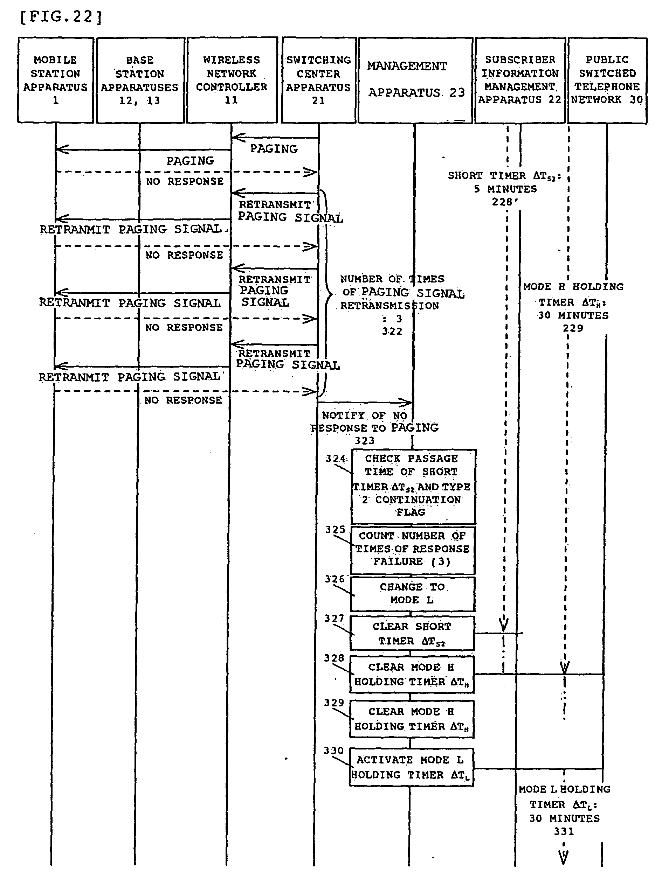

Figs. 21 and 22 show sequences in which the paging failure determination short timers ΔT_{S1} and ΔT_{S2} are activated in the state of the mode H shown in Fig. 7.

The sequences shown in Figs. 21 and 22 start from the state in which the mode is changed to the mode H (at 225) and the paging failure determination short timer ΔT_{S1} is activated in the sequence shown in Fig 14.

The paging request to the mobile station apparatus 1 is transmitted to the switching center apparatus 21 through the public switched telephone network 30 (at 310). The switching center apparatus 21 inquires the management apparatus 23 about the number of times of the paging signal retransmission (at 311). Since themobile station apparatus 1 is in themode H, the switching center apparatus 21 is notified of the increased set value (at 312).

The switching center apparatus 21 transmits the paging signal to the mobile station apparatus 1 and retransmits the paging signal thereto by as much as the increased set number of times (at 313), and is notified that the mobile station apparatus 1 fails to respond to the paging signal. The switching center apparatus 21 notifies the management apparatus 23 that there is no response of the mobile station apparatus 1 (at 314).

The management apparatus 23 checks a passage time of the paging signal retransmission determination timer (at 315), sets the number of times of the paging failure at two (at 316), clears the paging failure determination short timer ΔT_{S1} (at 317), and activates the next paging failure determination short timer ΔT_{S2} (at 318).

In this state, the paging request to the mobile station apparatus 1 is transmitted to the switching center apparatus 21 through the public switched telephone network 30 (at 319). The switching center apparatus 21 inquires the management apparatus 23 about the number of times of the paging signal retransmission (at 320). Since the mobile station apparatus 1 is in the mode H, the switching center apparatus 21 is notified of the increased set value (at 321).

The switching center apparatus 21 transmits the paging signal to the mobile station apparatus 1 and retransmits the paging signal thereto by as much as the increased set number of times (at 322), and is notified that the mobile station apparatus 1 fails to respond to the paging signal. The switching center apparatus 21 notifies the management apparatus 23 that there is no response of the mobile station apparatus 1 (at 323).

The management apparatus 23 checks a passage time of the paging signal retransmission determination timer (at 324), and sets the number of times of the paging failure at three (at 325). Since the number of times of the paging failure of three is the set number of times of the paging failure, the management apparatus 23 changes the mode of the mobile station apparatus 1 to the mode L (at 326), clears the paging failure determination short timer ΔT_{S2} (at 327), clears the mode H holding timer ΔT_{H} (at 328), and clears the number of times of the paging failure (at 329).

Further, the mode L holding timer ΔT_{L} is activated (at 330).

As stated so far, the number of times of the paging signal retransmission from the switching center apparatus to the mobile station apparatus through the base station apparatuses is changed for each mobile station apparatus based on the response of the mobile station apparatus to the paging signal or based on the call from the mobile station apparatus, so as to optimize the number of times of the paging signal retransmission. It is thereby possible to increase the call acceptance probability and reduce the system load.

### [BRIEF DESCRIPTION OF THE DRAWINGS]

[Fig. 1] Fig. 1 is a schematic block diagram of a wireless communication system.
[Fig. 2] Fig. 2 is a block diagram of a management apparatus.
[Fig. 3] Fig. 3 shows an example of parameters included in a management table.
[Fig. 4] Fig. 4 shows a change in the number of times of paging signal retransmission.
[Fig. 5] Fig. 5 shows a change in the number of times of paging signal retransmission.
[Fig. 6] Fig. 6 shows a change in the number of times of paging signal retransmission.
[Fig. 7] Fig. 7 shows a change in the number of times of paging signal retransmission.

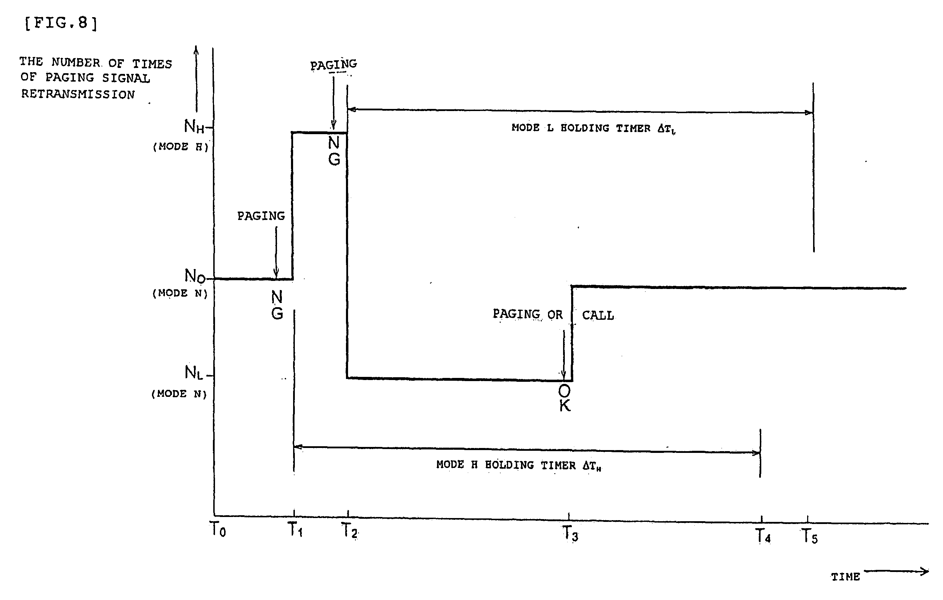

[Fig. 8] Fig. 8 shows a change in the number of times of paging signal retransmission.
[Fig. 9] Fig. 9 shows a state transition among modes.
[Fig. 10] Fig. 10 shows a processing flow executed by the management apparatus.
[Fig. 11] Fig. 11 shows a processing flow executed by the management apparatus.
[Fig. 12] Fig. 12 shows a processing flow executed by the management apparatus.
[Fig. 13] Fig. 13 shows a sequence of a mobile station apparatus paging control method.
[Fig. 14] Fig. 14 shows a sequence of the mobile station apparatus paging control method.
[Fig. 15] Fig. 15 shows a sequence of the mobile station apparatus paging control method.
[Fig. 16] Fig. 16 shows a sequence of the mobile station apparatus paging control method.
[Fig. 17] Fig. 17 shows a sequence of the mobile station apparatus paging control method.
[Fig. 18] Fig. 18 shows a sequence of the mobile station apparatus paging control method.

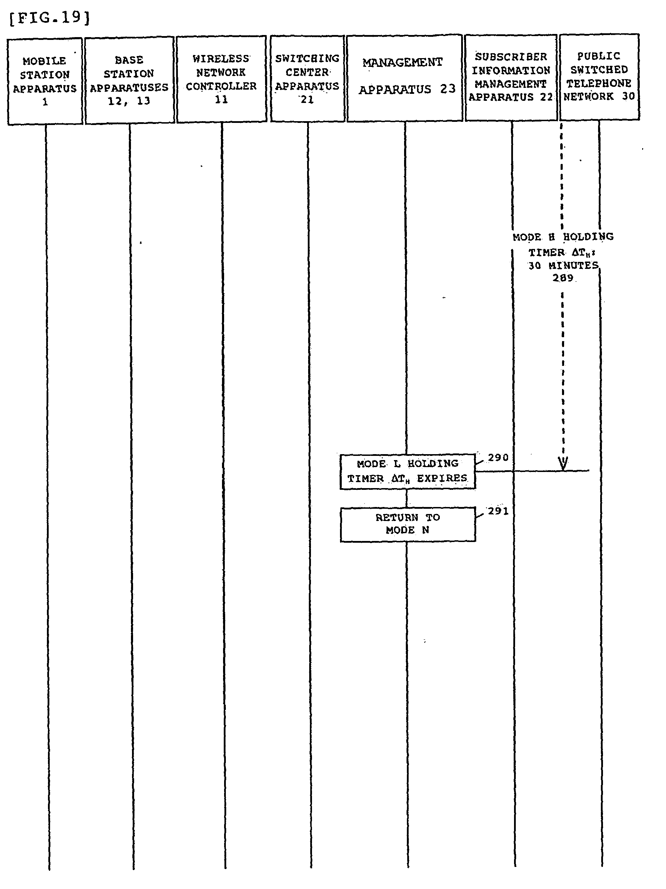

[Fig. 19] Fig. 19 shows a sequence of the mobile station apparatus paging control method.
[Fig. 20] Fig. 20 shows a sequence of the mobile station apparatus paging control method.
[Fig. 21] Fig. 21 shows a sequence of the mobile station apparatus paging control method.
[Fig. 22] Fig. 22 shows a sequence of the mobile station apparatus paging control method.

### [DESCRIPTION OF REFERENCE NUMERALS]

- 1: mobile station apparatus
- 10: mobile wireless network
- 11: wireless network controller
- 12, 13: base station apparatus
- 20: mobile switching center
- 21: switching center apparatus
- 22: subscriber information management apparatus
- 23: management apparatus
- 30: public switched telephone network
- 50: mode N
- 51: mode H
- 52: mode L
- 100: switching center apparatus interface
- 110: switching center apparatus message transmission section
- 120: paging signal retransmission determination processing section
- 130: subscriber information management apparatus interface
- 140: reference timer
- 150: number-of-times-of-retransmission management table
- 160: parameter setting interface

## Claims

1. A paging control method, which can change the number of times of paging signal retransmission for each mobile station apparatus in a W-CDMA mobile communication system, the method comprising steps of:
monitoring whether a mobile station apparatus responds to a paging signal or the mobile station apparatus calls; and
changing the number of times of the paging signal retransmission for each mobile station apparatus according to a response to the paging signal of the monitored mobile station apparatus or the call from the monitoredmobile station apparatus based on a predetermined standard.

2. The paging control method according to claim 1, wherein
if the mobile station apparatus fails to respond to the paging signal and the retransmitted paging signal by as much as an initial set number of times, the number of times of the paging signal retransmission is increased from the initial set number during a first time period;
if the mobile station apparatus responds to the paging signal or the retransmitted paging signal or the mobile station apparatus calls within the first time period, the number of times of the paging signal retransmission is returned to the initial set number, or if the first time period expires without a paging to the mobile station apparatus or without a call from the mobile station apparatus, the number of times of the paging signal retransmission is returned to the initial set number;
if the number of times of a paging failure, by as much as which the mobile station apparatus fails to respond to the paging signal or the retransmitted paging signal within the first time period, reaches a predetermined number of times, then the first time period is invalidated and the number of times of the paging signal retransmission is decreased from the initial set number during a second time period; and
if the mobile station apparatus responds to the paging signal or the retransmitted paging signal or the mobile station apparatus calls within the second time period, the number of times of the paging signal retransmission is returned to the initial set number, or if the second time period expires without the paging to the mobile station apparatus or without the call from the mobile station apparatus, the number of times of the paging signal retransmission is returned to the initial set number.

3. A W-CDMA mobile communication system capable of changing the number of times of a paging signal retransmission for each mobile station apparatus, the system comprising:
themobile station apparatus communicable with a switching center apparatus through a base station apparatus;
the switching center apparatus transmitting the paging signal to the mobile station apparatus through the base station apparatus in response to a request, and retransmitting the paging signal to the mobile station apparatus, if the mobile station apparatus fails to respond to the paging signal, or receiving a call from the mobile station apparatus through the base station apparatus; and
a management apparatus for managing the number of times of the paging signal retransmission for the each mobile station apparatus, wherein
the management apparatus includes recording means for recording a response of the mobile station apparatus to the paging signal or recording the call from the mobile station apparatus, thereby changing the number of times of the paging signal retransmission for the each mobile station apparatus according to a result recorded in the recording means based on a predetermined standard.

4. The mobile communication system according to claim 3, wherein
the management apparatus manages the number of times of the paging signal retransmission to the mobile station apparatus such that;
if the mobile station apparatus fails to respond to the paging signal and the retransmitted paging signal by as much as an initial set number of times, the number of times of the paging signal retransmission is increased from the initial set number during a first time period;
if the mobile station apparatus responds to the paging signal or the retransmitted paging signal or the mobile station apparatus calls within the first time period, the number of times of the paging signal retransmission is returned to the initial set number, or if the first time period expires without a paging to the mobile station apparatus or without a call from the mobile station apparatus, the number of times of the paging signal retransmission is returned to the initial set number;
if the number of times of a paging failure, by as much as which the mobile station apparatus fails to respond to the paging signal and the retransmitted paging signal within the first time period, reaches a predetermined number of times, then the first time period is invalidated and the number of times of the paging signal retransmission is decreased from the initial set number during a second time period; and
if the mobile station apparatus responds to the paging signal or the retransmitted paging signal or the mobile station apparatus calls within the second time period, the number of times of the paging signal retransmission is returned to the initial set number, or if the second time period expires without the paging to the mobile station or without the call from the mobile station apparatus, the number of times of the paging signal retransmission is returned to the initial set number.

5. The mobile communication system according to claim 3, wherein the recording means includes a management table that enables centralized management of the number of times of the paging signal retransmission for each mobile station apparatus, the management table including at least one of time information on time at which the number of times of the paging signal retransmission is changed, a present value of the number of times of the paging signal retransmission, the number of times of the paging failure, the first time period, and the second time period for each mobile station apparatus.
